# EUROPEAN PATENT APPLICATION

(11) **EP 3 264 375 A1**
(43) Date of publication of application: **03.01.2018**
(21) Application number: 16806841.9
(22) Date of filing: 08.06.2016
(51) Int. Cl.: G07F 17/00

(54) **BICYCLE MANAGEMENT SYSTEM AND CONTROL METHOD AND APPARATUS THEREFOR**

(30) Priority: 11.06.2015 CN 201510319473
(71) Applicant: Beijing Mobike Technology Co., Ltd., Beijing 100083 (CN)
(72) Inventor: XIA, Yiping, Beijing 100083 (CN); HU, Weiwei, Beijing 100083 (CN); ZHANG, Yan, Beijing 100083 (CN)
(74) Representative: Rau, Schneck & Hübner Patentanwälte Rechtsanwälte PartGmbB
(86) International application number: PCT/CN2016/085258
(87) International publication number: WO 2016/197943

(57) **Abstract**

A bicycle management system is provided, comprising a mobile communication apparatus (10), a cloud end (20), a bicycle (30) and an operation strategy center (40); wherein the bicycle (30) includes a bicycle-mounted electronic apparatus (31); the operation strategy center (40) is connected with the cloud end (20), and is used for providing a bicycle management strategy for the cloud end (20); the mobile communication apparatus (10) establishes a communication with the cloud end (20) through a wireless network, the cloud end (20) establishes a communication with the bicycle-mounted electronic apparatus (31) of the bicycle (30) through the wireless network; wherein the mobile communication apparatus (10) controls the bicycle (30) via the cloud end (20); and the bicycle (30) periodically reports its state information to the cloud end (20). A bicycle-mounted electronic apparatus (31) and a bicycle (30) including a bicycle-mounted electronic apparatus (31) are also provided.

## Description

### FIELD OF THE INVENTION

The present invention relates to the field of information services for bicycle traffic systems, and more particularly to a bicycle management system and a control method and an apparatus therefor.

### BACKGROUND OF THE INVENTION

With the rapid development of the economy and society and the continuous improvement of people's living standards, China's motorization has always been accelerating. However, problems of tremendous energy consumption, serious environmental pollution, urban traffic congestion and the like arise consequentially. Such problems not only bring lots of inconvenience to people's lives, but also always endanger people's health. In order to effectively alleviate or avoid these problems, urban management departments of many cities develop and introduce a variety of approaches and/or solutions, such as controlling the number of motor vehicles, performing travel restriction based on the last digit of license plate numbers, raising motor vehicle exhaust emission standards, encouraging people to buy electric vehicles, vigorously developing public transport facilities such as subways, buses and the like to guide people to use green travel means, and so on.

China is a big country in producing and using bicycles which always serve as main transportation tools for people travelling a short distance in a city for a long time. In addition, due to advantages of low price, light weight, energy saving and environmental protection of the bicycles, especially with the deepening of ideas of green tourism, environmental protection and healthy living in recent years, more and more people start to choose green travel manners, such as bicycle riding.

At present, bicycle management systems on the market are mainly implemented by arranging some bicycle storage points (for example, near subway stations, bus stations, and the like) separated by a certain distance in a certain area of a city. Generally, more than a dozen bicycles may be placed at each storage point. However, these bicycles are mostly traditional ones that generally need someone to maintain and manage. What's worse, communication and information sharing cannot be achieved among the multiple storage points, or between the storage points and the bicycles, or among the bicycles, and there is no special bicycle management platform to perform unified management and resource deployment on storage points and bicycles therein in a certain area, so that efficient and reasonable allocation of limited bicycle resources cannot be achieved. In addition, during use of such bicycles, users frequently suffer the following problems. For example, they cannot find available bicycles near the destination conveniently, cannot book bicycles in advance, or cannot use the bicycles until they conduct relevant procedures (such as, applying a bicycle rental card, paying a deposit, etc.); the bicycles are stolen, and the bicycle return manners are relatively monotonous. These problems bring great inconvenience to the users.

Therefore, there is a demand in the art that a new solution for bicycle management shall be proposed to address at least one of the problems in the prior art.

### SUMMARY OF THE INVENTION

In order to overcome the defects in the prior art, solutions are proposed herein.

According to an aspect of the present invention, there is provided a bicycle management system, comprising a mobile communication apparatus, a cloud end, a bicycle and an operation strategy center; wherein the bicycle includes a bicycle-mounted electronic apparatus; the operation strategy center is connected with the cloud end, and is used for providing a bicycle management strategy for the cloud end; the mobile communication apparatus establishes a communication with the cloud end through a wireless network, the cloud end establishes a communication with the bicycle-mounted electronic apparatus of the bicycle through the wireless network; wherein the mobile communication apparatus controls the bicycle via the cloud end; and the bicycle periodically reports its state information to the cloud end.

Preferably, the bicycle further comprises an anti-theft device which is electrically connected to the bicycle-mounted electronic apparatus and whose unlocking and/or locking is controlled by the bicycle-mounted electronic apparatus according to an instruction from the mobile communication apparatus and/or the cloud end.

Preferably, the bicycle-mounted electronic apparatus includes a control unit, a sensor device and a communication interface, wherein the sensor device and the communication interface are connected to the control unit respectively; the control unit performs bidirectional communication with the cloud end via the communication interface; the control unit performs bidirectional communication with the mobile communication apparatus via the communication interface; and the sensor device collects state information of the bicycle in real time, and the control unit processes the state information and sends the processed state information to the cloud end via the communication interface.

Preferably, the bicycle-mounted electronic apparatus further comprises an input device which is connected to the control unit and by which an instruction or information is input into the control unit so that the control unit executes the instruction or information.

Preferably, the state information includes one or more pieces of following information: unlocking state information, bicycle locking state information, position information, a riding distance, a riding time, a riding speed and power.

According to another aspect of the present invention, there is provided a control method for the above bicycle management system, comprising: a logon step for allowing the mobile communication apparatus to establish a connection with the cloud end; a bicycle pickup step for unlocking the bicycle according to an unlocking instruction sent from the mobile communication apparatus and/or the cloud end so that a bicycle enters an available state; a bicycle use step for allowing the bicycle-mounted electronic apparatus to collect state information of the bicycle and to send the state information to the mobile communication apparatus and/or the cloud end; and a bicycle return step for allowing the cloud end to confirm a bicycle locking state and to terminate the bicycle use after a user's ride ends.

Preferably, the method further comprises: a booking step for providing information about available bicycles near the user's input destination and allowing the user to book a bicycle within the scope of the available bicycles; and a bicycle seeking step of helping the user find the booked bicycle when the user gets close to the destination.

Preferably, the method further comprises: a bicycle search step for, according to the user's current position, providing information about available bicycles near the user's current position, and guiding the user to find an available bicycle near the user's current position.

Preferably, the bicycle use step includes a pause step for pausing the use of the bicycle.

According to another aspect of the present invention, there is provided a control apparatus for the above bicycle management system, comprising: a logon means for allowing the mobile communication apparatus to establish a connection with the cloud end; a bicycle pickup means for unlocking the bicycle according to an unlocking instruction sent from the mobile communication apparatus and/or the cloud end so that a bicycle enters an available state; a bicycle use means for allowing the bicycle-mounted electronic apparatus to collect state information of the bicycle and to send the state information to the mobile communication apparatus and/or the cloud end; and a bicycle return means for allowing the cloud end to confirm a bicycle locking state and to terminate the bicycle use after a user's ride ends.

Preferably, the apparatus further comprises: a booking means for providing information about available bicycles near the user's input destination and allowing the user to book a bicycle within the scope of the available bicycles; and a bicycle seeking means of helping the user find the booked bicycle when the user gets close to the destination.

Preferably, the apparatus further comprises: a bicycle search means for, according to the user's current position, providing information about available bicycles near the user's current position, and guiding the user to find an available bicycle near the user's current position.

Preferably, the bicycle use means includes a pause means for pausing the use of the bicycle.

According to another aspect of the present invention, there is provided a bicycle-mounted electronic apparatus, including a control unit, a sensor device and a communication interface, wherein the sensor device and the communication interface are connected to the control unit respectively; the control unit performs bidirectional communication with the cloud end via the communication interface; the control unit performs bidirectional communication with the mobile communication apparatus via the communication interface; and the sensor device collects state information of the bicycle in real time and sends the state information to the control unit.

Preferably, the bicycle-mounted electronic apparatus further comprises an input device which is connected to the control unit and by which an instruction or information is input into the control unit so that the control unit executes the instruction or information.

According to another aspect of the present invention, there is provided a bicycle comprising the above bicycle-mounted electronic apparatus, wherein the bicycle further comprises an anti-theft device which is electrically connected to the bicycle-mounted electronic apparatus and whose unlocking and/or locking is controlled by the bicycle-mounted electronic apparatus according to an instruction from the mobile communication apparatus and/or the cloud end.

According to the technical solutions proposed by the present invention, optimized strategies can be made according to the distribution of bicycles. The user can be guided and helped by the mobile communication apparatus when searching for, booking, seeking and returning the bicycle. At the same time, the user can acquire real time riding data, position information and the like. Thus, limited bicycle resources can be utilized reasonably and efficiently while facilitating the user's use and improving the user's experience.

### BRIEF DISCRIPTION OF THE DRAWINGS

The respective aspects of this invention can be understood with reference to the preferable embodiments shown in the drawings, wherein identical reference numbers in the drawings represent the same steps or components.
Fig. 1 is a schematic diagram of modules of a bicycle management system provided by an embodiment of the present invention;
Fig. 2 is a schematic diagram of functional modules of a bicycle provided by an embodiment of the present invention;
Fig. 3 is a flow chart of a control method for a bicycle management system according to an embodiment of the present invention;
Fig. 4 is a flow chart of a control method for a bicycle management system according to another embodiment of the present invention;
Fig. 5 is a flow chart of a logon step in a control method for a bicycle management system provided by an embodiment of the present invention;
Fig. 6 is a flow chart of a booking step in the control method for the bicycle management system provided by an embodiment of the present invention;
Fig. 7 is a flow chart of a bicycle seeking step in the control method for the bicycle management system provided by an embodiment of the present invention;
Fig. 8 is a flow chart of a bicycle pickup step in the control method for the bicycle management system provided by an embodiment of the present invention;
Fig. 9 is a flow chart of a bicycle use step in the control method for the bicycle management system provided by an embodiment of the present invention;
Fig. 10 is a flow chart of a pause function in the bicycle use step shown in Fig. 9;
Fig. 11 is a flow chart of a bicycle return step in the control method for the bicycle management system provided by an embodiment of the present invention; and
Fig. 12 is a flow chart of a bicycle search step in the control method for the bicycle management system provided by an embodiment of the present invention.

### DETAILED DESCRIPTION OF THE EMBODIMENTS

This invention will herein be described with reference to some embodiments shown in the drawings. In order to explain this invention, many specific details are described herein. However, it shall be understood by a person skilled in the art that the present invention can be carried out without some or all of the specific details. In other situations, the well-known processing steps and/or structures are not described in detail, without blurring the present invention. In addition, although the present invention is described with reference to some specific embodiments, it shall be understood that these descriptions are not intended to limit the present invention to the described embodiments. On the contrary, these descriptions are intended to cover the modifications, improvements and equivalents within the spirit and scope of the present invention defined by the accompanied claims.

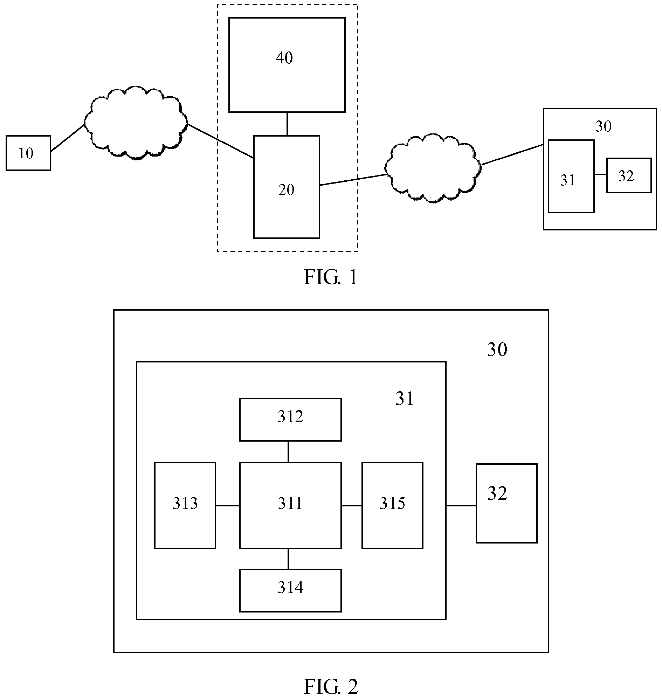

Fig.1 is a schematic diagram of modules of a bicycle management system provided by an embodiment of the present invention. Referring to Fig. 1, those skilled in the art should understand that the present invention may also be realized through part of these components, and the type and the arrangement of such components may be changed without departing from the spirit and the scope of the present invention.

As shown in Fig. 1, the embodiment of the present invention provides a bicycle management system comprising a mobile communication apparatus 10, a cloud end 20, a bicycle 30, and an operation strategy center 40. The bicycle 30 comprises a bicycle-mounted electronic apparatus 31 and an anti-theft device 32. The operation strategy center 40 is connected to the cloud end 20 and configured to provide bicycle management strategies for the cloud end. The mobile communication apparatus 10 establishes a communication with the cloud end 20 via a wireless network; and the cloud end 20 establishes a communication with the bicycle-mounted electronic apparatus 31 of the bicycle 30 via the wireless network. The mobile communication apparatus 10 controls the bicycle 30 via the cloud end 20. The bicycle 30 periodically reports its state information to the cloud end 20. The state information includes one or more pieces of following information: unlocking state information, bicycle locking state information, position information, a riding distance, a riding time, a riding speed, power, and the like.

In the embodiments of the present invention, the mobile communication apparatus may send or receive a signal via a wired or wireless network or other manners, or may process or store the signal, for example, in a memory in a physical storage state. Each mobile communication apparatus may be an electronic device that comprises hardware, software, or an embedded logic component or a combination of two or more such components, and is capable of executing appropriate functions executed or supported by the mobile communication device. For example, the mobile terminal apparatus may be a smart cell phone, a tablet computer, a portable email device, an electronic book, a handheld gaming machine and/or game controller, a notebook computer, an Internet surfing computer, a handheld electronic device, a smart wearable device or the like. The present invention covers any suitable mobile terminal. The mobile terminal may enable its user to access a network. The mobile communication apparatus may also enable its user to communicate with other users on other mobile communication apparatuses.

According to some embodiments of the present invention, the mobile communication apparatus may comprise a processing device including an application processing portion and a radio frequency/digital signal processor, a display screen, a mini keyboard that may comprise physical keys, touch keys covering the display screen or a combination thereof, a user identification module card, a memory device that may comprise a ROM, a RAM, a flash memory or any combination thereof, a Wi-Fi and/or Bluetooth interface, a wireless telephone interface, a power supply management circuit with an associated battery, a USB interface and connector, an audio management system with an associated microphone, speaker and headphone jack, and various optional accessories such as a digital camera, a global positioning system and an accelerator. In addition, various client applications may be installed on the mobile communication apparatus, and may be configured to allow the use of the mobile communication apparatus to transmit commands suitable for operation with other devices. Such applications may be downloaded from a server and installed into the memory of the mobile communication apparatus, and may be pre-installed on the mobile communication apparatus. In the embodiments of the present invention, the mobile communication apparatus is provided with a bicycle user terminal application which can help a user book a bicycle, search for the bicycle, use the bicycle and return the bicycle. In other embodiments of the present invention, the mobile communication apparatus may also be provided with a maintenance personnel application that may assist maintenance personnel in realizing functions of operational management for the bicycle, wherein the functions include, but are not limited to, maintenance, theft prevention, and the like.

In the embodiments of the present invention, both the cloud end and the operation strategy center are servers. The server in this description should be understood as a service point providing processing, database and communication facilities. For example, the server may be a single physical processor including related communication, data storage and database facilities, or a networked or clustered processor, or a cluster of related networks and storage devices, and can operate software, one or more databases and application software providing services supported by the server. The servers may vary greatly in configuration or performance, but generally the server may include one or more central processing units and memories. The server further includes one or more large-volume storage devices, one or more power sources, one or more wired or wireless network interfaces, one or more input/output interfaces, one or more operating systems such as Windows Server, Mac OS X, Unix, Linux and FreeBSD, and the like.

According to some embodiments of the present invention, the cloud end or the operation strategy center may be an integral server or distributed servers across multiple computers or computer data centers. The server may include various servers, such as a network server, a news server, a mail server, a message server, an advertisement server, a file server, an application server, an interactive server, a database server or a proxy server, but is not limited thereto. In some embodiments, each server may include hardware, software and an embedded logic component or a combination of two or more such components configured to execute suitable functions supported or realized by the server. In the present invention, the server is configured to provide all functions necessary for supporting bicycle management.

Fig. 2 is a schematic diagram of functional modules of a bicycle provided by an embodiment of the present invention. As shown in Fig. 2, the bicycle 30 comprises a bicycle-mounted electronic apparatus 31, an anti-theft device 32, and a power source (not shown). The bicycle-mounted electronic apparatus 31 is electrically connected to the anti-theft device 32; and the bicycle-mounted electronic apparatus 31 controls the anti-theft device 32 to lock and/or unlock according to an instruction from the cloud end 20 and/or the mobile communication apparatus 10 or an instruction manually input by the user on the bicycle-mounted electronic apparatus. The power supply is configured to supply power to various components on the bicycle.

According to some embodiments of the present invention, the bicycle-mounted electronic apparatus 31 comprises a control unit 311, an input device 312, a display 313 (e.g., an LED display), a sensor device 314 and a communication interface 315. The input device 312, the display 313, the sensor device 314, and the communication interface 315 are communicatively connected to the control unit 311, respectively. The control unit 311 comprises a microprocessor for processing data and a memory for storing data. The control unit 311 may bidirectionally communicate with the cloud end 20 and the mobile communication apparatus 10 via the communication interface 315. A user may input an instruction or information into the control unit 311 via the input device 312 so that the control unit executes the instruction or information. The sensor device 314 may collect state information (for example, a riding distance, position information, a riding speed, and the like) of the bicycle in real time, and transmit the state information to the control unit 311. The display 313 may display content (e.g., a riding distance, a map, a riding speed, etc.) and/or an interface (e.g., an interactive interface) desired by the user. Of course, the display 313 is not a necessary component for the bicycle-mounted electronic apparatus 31.

According to another aspect of the present invention, there is provided a control method for a bicycle management system. In some embodiments, the control method for the bicycle management system comprises part or all of a logon step, a booking step, a bicycle seeking step, a bicycle pickup step, a bicycle use step and a bicycle return step. In other embodiments, the control method for the bicycle management system comprises part or all of the logon step, a bicycle search step, the bicycle pickup step, the bicycle use step and the bicycle return step. The various steps of the control method provided by the embodiment of the present invention will be described in detail below with reference to the flow charts.

It is understandable that each block and combinations of the blocks in the flow charts may be implemented by analog/digital hardware and computer program instructions. These flows may be provided to a processor of a general purpose computer, a special purpose computer, an ASIC or other programmable data processing device, so that instructions executed by a processor of the computer or other programmable data processing devices may implement functions/actions designated in the flow charts. Each aspect or feature will be presented in a system that may comprise a plurality of apparatuses, components, modules, and the like. It is understandable that each system may comprise additional apparatuses, components, modules, and the like, and/or may not include all of the apparatuses, components, modules, and the like set forth in the accompanying drawings. Combinations of the above parts may also be available.

In some alternative embodiments, the functions/operations mentioned in the block diagrams may be performed without following an order referred to in the operation diagrams. For example, depending on the involved functions/operations, the two consecutively shown blocks may in fact be executed simultaneously substantially, or may sometimes be executed in the reverse order. In addition, the embodiments presented and described in the flow charts of the present invention are provided in a form of examples, so as to provide a more complete understanding of the technology. The disclosed method is not limited to the operations and logical flows presented in this description. Alternative embodiments are predictable; and in the alternative embodiments, the orders of the various operations are changed, and a part of sub-operations of described to be relatively complicated operations is executed independently.

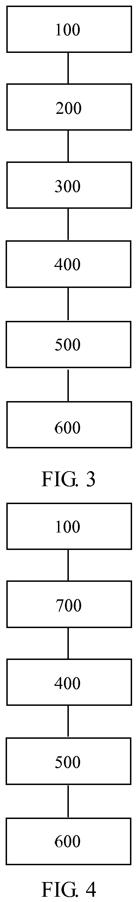

Fig. 3 shows a flow chart of a control method for a bicycle management system according to an embodiment of the present invention.

As shown in Fig. 3, the method includes a logon step 100, a booking step 200, a bicycle seeking step 300, a bicycle pickup step 400, a bicycle use step 500 and a bicycle return step 600. The logon step 100 is configured to allow a mobile communication apparatus of a user to establish a connection with a cloud end; the booking step 200 is configured to provide information about available bicycles near the user to the user according to a destination input by the user, so that the user can book a bicycle within the scope of the available bicycles; the bicycle seeking step 300 is configured to help the user find his/her booked bicycle when he/she gets close to the destination; the bicycle pickup step 400 is configured to unlock the bicycle according to an unlocking instruction sent from the mobile communication apparatus of the user and/or the cloud end; the bicycle use step 500 is configured to send state information of the bicycle used by the user in a riding process to the mobile communication apparatus of the user and/or the cloud end, the state information being acquired automatically by the bicycle; and the bicycle return step 600 is configured to send bicycle locking state information to the cloud end after a user's ride ends. After confirming the bicycle locking state, the cloud end confirms to the mobile communication apparatus that this bicycle use terminates. The bicycle locking state may be implemented by the user manually, or may be implemented by using the bicycle-mounted electronic apparatus to automatically lock the bicycle based on a locking instruction sent from the mobile communication apparatus of the user and/or the cloud end.

Fig. 4 shows a flow chart of another control method for a bicycle management system according to another embodiment of the present invention. Unlike the control method shown in Fig. 3, the control method shown in Fig. 4 mainly focuses on a case that a user directly searches for a bicycle (rather than books a bicycle).

As shown in Fig. 4, the method comprises a logon step 100, a bicycle search step 700, a bicycle pickup step 400, a bicycle use step 500 and a bicycle return step 600. The logon step 100 is configured to allow a mobile communication apparatus of a user to establish a connection with a cloud end; the bicycle search step 700 is configured to provide information about available bicycles near a user's current position according to the user's current position, and guide the user to find an available bicycle near the user's current position; the bicycle pickup step 400 is configured to unlock the bicycle according to an unlocking instruction sent from the mobile communication apparatus of the user and/or the cloud end; the bicycle use step 500 is configured to send state information of the bicycle used by the user in a riding process to the mobile communication apparatus of the user and/or the cloud end, the state information being acquired automatically by the bicycle; and the bicycle return step 600 is configured to allow the cloud end to confirm a bicycle locking state and to terminate the bicycle use after a user's ride ends. It should be noted that bicycle locking may be implemented by the user manually locking the bicycle, or may be implemented by using the bicycle-mounted electronic apparatus to control the anti-theft device to lock the bicycle based on a locking instruction sent from the mobile communication apparatus of the user and/or the cloud end.

According to an actual situation, the above-mentioned method may include a payment step, so that the system can automatically calculate the price according to pre-made charging rules, and the user can pay through payment manners, for example, network payment (such as Alipay and Wechat Payment), bank card payment and the like. Of course, the payment step is not necessary, and the system can also provide users with a free bicycle service.

The various steps of the control method provided by the embodiment of the present invention will be described in detail below in accordance with the flow charts.

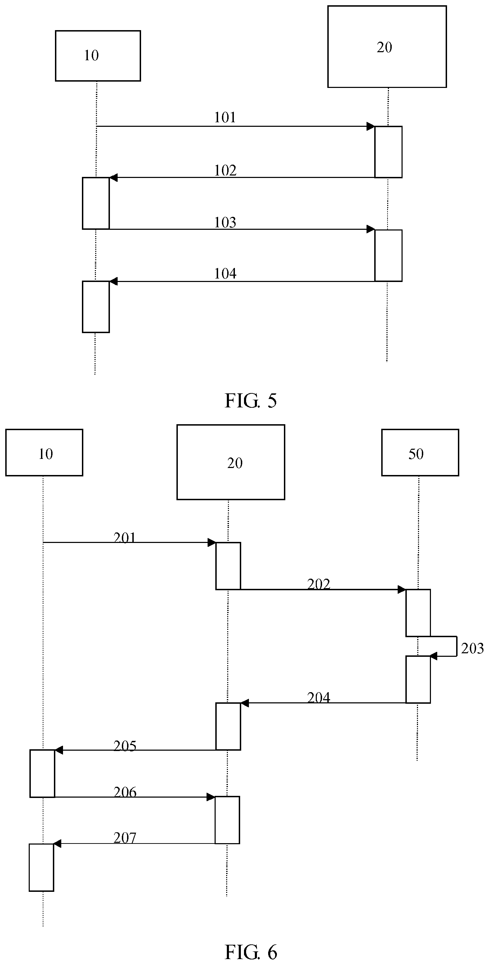

Fig. 5 shows a flow chart of the logon step 100 in a control method for a bicycle management system according to an embodiment of the present invention. When a user first uses the system, he/she needs to register online and fill in necessary user information. Of course, the user can download a bicycle user terminal application from the cloud end to the mobile communication apparatus via a network and locally install the application to the mobile communication apparatus, or the mobile communication apparatus of the user is pre-installed with the bicycle user terminal application. In the logon step, the user enables the bicycle user terminal application on the mobile communication apparatus to allow the mobile communication apparatus to establish a connection with the cloud end.

As shown in Fig. 5, in step 101, the mobile communication apparatus running the bicycle user terminal application requests a verification code from the cloud end; in step 102, after receiving the verification code request sent from the mobile communication apparatus of the user, the cloud end performs verification and confirmation, and sends the verification code to the mobile communication apparatus via a short message, an email, a voice call or the like; in step 103, after receiving the verification code sent from the cloud end, the user inputs the verification code into the mobile communication apparatus, and the mobile communication apparatus sends the verification code to the cloud end via the network; and in step 104, after verifying the verification code, the cloud end sends logon confirmation information to the mobile communication apparatus of the user.

Fig. 6 shows a flow chart of the booking step 200 in the control method for the bicycle management system according to an embodiment of the present invention. In the booking step, information (including but not limited to a picture, a type, configuration and the like) about available bicycles near a user's designated destination is searched for based on information (such as the destination, an area code or the like) input by the user; a state of each bicycle is displayed on the mobile communication apparatus; the user can select a bicycle to be booked within the scope of the available bicycles; the mobile communication apparatus sends user's confirmation information to the cloud end; and the cloud end indicates that the bicycle has been booked by the user, and starts to count a booking time.

As shown in Fig. 6, in step 201, the user sends a request for inquiring the booked bicycle to the cloud end via the mobile communication apparatus; in step 202, after receiving the request from the user, the cloud end sends a request for calling a bicycle distribution strategy to an operation strategy center; in step 203, after receiving the request from the cloud end, the operation strategy center acquires data of the available bicycles by an algorithm; in step 204, the operation strategy center sends the data of the available bicycles to the cloud end; in step 205, the cloud end sends the data of the available bicycles to the mobile communication apparatus; in step 206, the user books a designated bicycle via the mobile communication apparatus according to the data of the available bicycles sent from the cloud end, and sends booking information to the cloud end via the mobile communication apparatus; and in step 207, after confirming the designated bicycle booked by the user, the cloud end transmits booking feedback to the mobile communication apparatus. By performing the above booking step, the user can complete the booking in advance at home, in a vehicle or at other places, thereby improving the bicycle seeking efficiency. Meanwhile, when the user seeks a bicycle through the mobile communication apparatus, calculation complexity when users compete for the same bicycle is reduced.

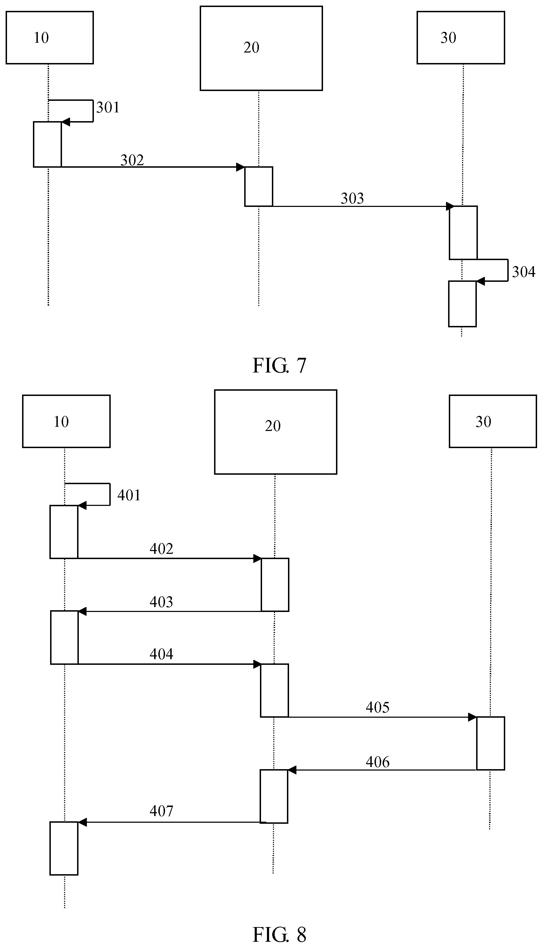

Fig. 7 shows a flow chart of the bicycle seeking step 300 in the control method for the bicycle management system according to an embodiment of the present invention.

As shown in Fig. 7, in step 301, a user's current position is determined based on a positioning function of the mobile communication apparatus, and the bicycle booked by the user is sought; in step 302, when the user is within a distance range from the booked bicycle, the mobile communication apparatus sends information to the cloud end; in step 303, after receiving the information sent from the mobile communication apparatus, the cloud end sends a command to the bicycle; and in step 304, after the booked bicycle receives the command sent from the cloud end, for example, its taillight flashes, so that the user can find it easily.

Fig. 8 shows a flow chart of the bicycle pickup step 400 in the control method for the bicycle management system according to an embodiment of the present invention. In the bicycle pickup step, the user can unlock the booked bicycle by scanning a two-dimensional code, or inputting the number on the frame, or the like after he/she reaches the target position.

As shown in Fig. 8, in step 401, the user may input the bicycle number in the mobile communication apparatus or scan the two-dimensional code via the mobile communication apparatus; in step 402, the mobile communication apparatus communicates with the cloud end to verify an unlocking condition; in step 403, the cloud end returns verification information to the mobile communication apparatus; in step 404, the mobile communication apparatus sends an unlocking request to the cloud end; after receiving the unlocking request, the cloud end directly sends an unlocking instruction to the bicycle-mounted electronic apparatus of the bicycle to unlock (step 405), or sends the unlocking instruction to the mobile communication apparatus of the user; and then the mobile communication apparatus transfers/inputs the unlocking instruction to the bicycle to unlock (not shown in the figure); in step 406, the bicycle transmits unlocking state information to the cloud end; and in step 407, the cloud end sends unlocking state information feedback to the mobile communication apparatus.

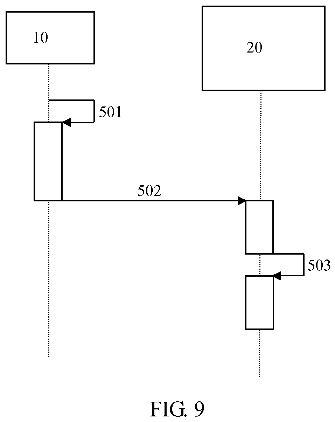

Fig. 9 shows a flow chart of the bicycle use step 500 in the control method for the bicycle management system according to an embodiment of the present invention. In a riding process of the user, the system may automatically prompt the current state information of the bicycle. The current state information includes but is not limited to position information, a riding distance, a riding time, a riding speed, power, etc.

As shown in Fig. 9, in step 501, the mobile communication apparatus updates the position information; in step 502, after the user's ride ends, the mobile communication apparatus sends the state information of the bicycle used by the user to the cloud end; and in step 503, the cloud end receives the state information of the bicycle used by the user and records it. In the bicycle use step, the user may view the state information at any time and send a state view request via the mobile communication apparatus. The cloud end establishes communication with the bicycle and acquires the state information from the bicycle; then the cloud end sends the information to the mobile communication apparatus; and the mobile communication apparatus displays the information.

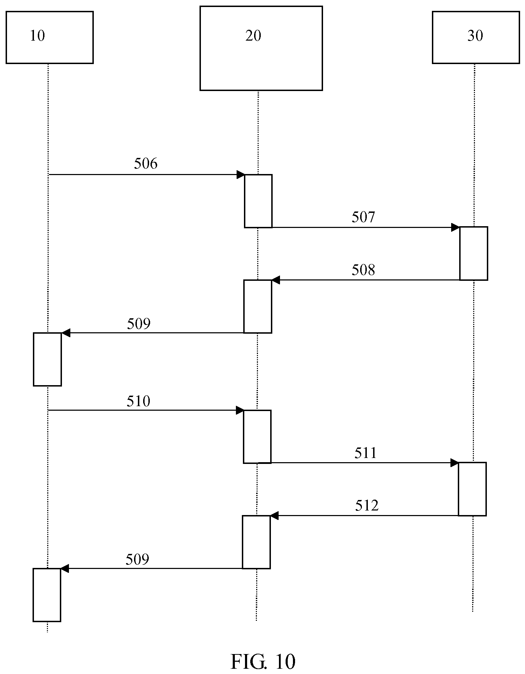

In addition, in some embodiments, if the user needs to pause riding due to various reasons in use of the bicycle, he/she may use a pause function 505 at this time. Fig. 10 shows a flow chart of the pause function. As shown in Fig. 10, in step 506, the user sends a pause request to the cloud end via the mobile communication apparatus; in step 507, the cloud end establishes communicate with the bicycle to inquire bicycle locking state information thereof; in step 508, a bicycle terminal sends the bicycle locking state information to the cloud end; and in step 509, after confirming that the bicycle has been locked based on the bicycle locking state information sent from the bicycle terminal, the cloud end sends a bicycle use pause notification feedback to the mobile communication apparatus. If the user cancels the pause and continues to use the bicycle, the mobile communication apparatus sends the bicycle continuation use request to the cloud end (step 510); after receiving the bicycle continuation use request, the cloud end directly sends an unlocking instruction to the bicycle-mounted electronic apparatus of the bicycle to unlock (step 511), or sends the unlocking instruction to the mobile communication apparatus of the user; and then the mobile communication apparatus transfers/inputs the unlocking instruction to the bicycle-mounted electronic apparatus to unlock (not shown in the figure). In step 512, the bicycle-mounted electronic apparatus transmits unlocking state information to the cloud end. In step 513, the cloud end sends unlocking state information feedback to the mobile communication apparatus, so that the user can continue using the bicycle.

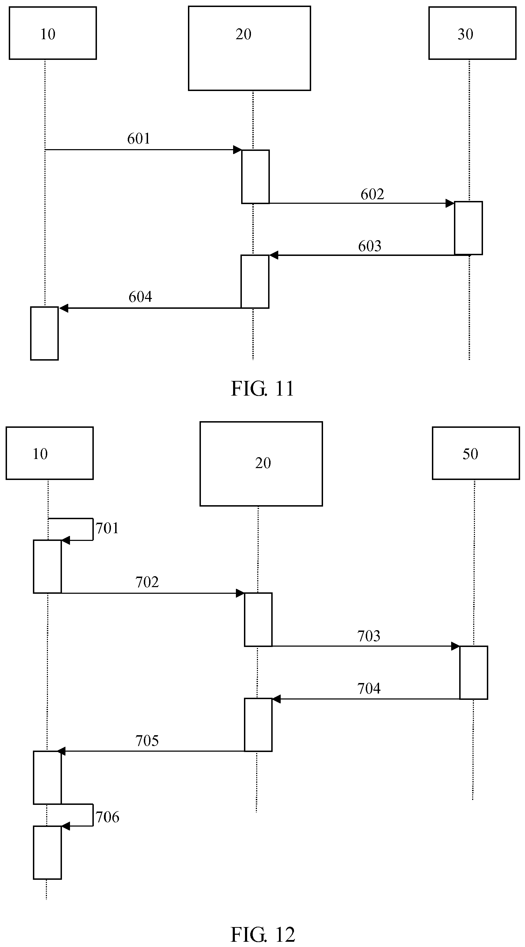

Next, the bicycle return step 600 is described. As shown in Fig. 11, after the user's ride ends and the bicycle is locked, a bicycle return request is sent to the cloud end via the mobile communication apparatus (step 601); after receiving the bicycle return request, the cloud end sends an instruction for inquiring bicycle locking state information to the bicycle-mounted electronic apparatus (step 602); after receiving the instruction, the bicycle-mounted electronic apparatus sends the bicycle locking state information to the cloud end (step 603); and when confirming that the bicycle has been locked based on the bicycle locking state information, the cloud end sends information confirming the success of bicycle return to the mobile communication apparatus to terminate the bicycle use (step 604). Meanwhile, the cloud end reports to the operation strategy center that the bicycle use is terminated, and the operation strategy center updates the state of the bicycle to allow it to be available again.

It should be noted herein that the bicycle locking state in the embodiments of the present invention can be implemented by a user manually locking the bicycle, or may be implemented by using the bicycle-mounted electronic apparatus to control the anti-theft device to lock the bicycle based on the locking instruction sent from the mobile communication apparatus of the user and/or the cloud end.

Fig.12 shows a flow chart of the bicycle search step 700 in the control method for the bicycle management system according to another embodiment of the present invention. In the bicycle search step, the user enables a positioning function of the mobile communication apparatus to determine its own position and the user is guided to find the position where the target bicycle is parked via a navigation function of the mobile communication apparatus.

As shown in Fig. 12, in step 701, a current position of the user is determined based on the positioning function of the mobile communication apparatus; in step 702, the mobile communication apparatus searches for nearby bicycle requests and sends the searched data to the cloud end; in step 703, the cloud end calculates operation strategies of displayed bicycles and sends the operation strategies to the operation strategy center; in step 704, the operation strategy center determines the strategy and transmits the finally determined strategy to the cloud end; in step 705, the cloud end sends the position information of the bicycle to the mobile communication apparatus; and in step 706, the navigation function of the mobile communication apparatus is started.

In addition, the control method for the bicycle management system provided by the embodiments of the present invention may further comprise a canceling step not shown in the figures. The canceling step allows a user to cancel the booking of a bicycle or to abandon the search of the bicycle according to actual demands, and may be performed at any stage of the control method. In addition, the operation strategy center may also perform active cancelling. Once the system determines that the user does not meet a specific condition, or the user does not unlock the bicycle after a predetermined time period, the operation strategy center may cancel or terminate the use of the bicycle via the cloud end.

Although various concepts have be described in detail, it shall be understood by a person skilled in the art that various modifications and replacements of these concepts are feasible under the teaching of this disclosure.

In addition, although this invention is described in the context of functional modules and is explained by using block diagram, it shall be understood that unless otherwise explained, one or more of the functions and/or features can be integrated into a single physical device and/or a single software module, or one or more of the functions and/or features can be carried out in a single physical device and/or a single software module. It shall also be understood that a detailed discussion regarding the implementation of each module is not necessary. More specifically, in view of the attributes, functions and internal relationships of various functional modules in the system of this disclosure, an engineer will know how to carry out the modules with a general technology. Therefore, the invention defined in the claims can be carried out by a person skilled in the art by using a general technique without excessive experiments. It shall also be understood that the disclosed specific concept is just for illustration and is not intended to limit the scope of this invention, and the scope of this invention is defined by the claims and the equivalents thereo f.

## Claims

1. A bicycle management system, comprising a mobile communication apparatus, a cloud end, a bicycle and an operation strategy center; wherein the bicycle includes a bicycle-mounted electronic apparatus; the operation strategy center is connected with the cloud end, and is used for providing a bicycle management strategy for the cloud end; the mobile communication apparatus establishes a communication with the cloud end through a wireless network, the cloud end establishes a communication with the bicycle-mounted electronic apparatus of the bicycle through the wireless network; wherein the mobile communication apparatus controls the bicycle via the cloud end; and the bicycle periodically reports its state information to the cloud end.

2. The system according to claim 1, **characterized in that** the bicycle further comprises an anti-theft device which is electrically connected to the bicycle-mounted electronic apparatus and whose unlocking and/or locking is controlled by the bicycle-mounted electronic apparatus according to an instruction from the mobile communication apparatus and/or the cloud end.

3. The system according to claim 1 or 2, **characterized in that** the bicycle-mounted electronic apparatus includes a control unit, a sensor device and a communication interface, wherein the sensor device and the communication interface are connected to the control unit respectively; the control unit performs bidirectional communication with the cloud end via the communication interface; the control unit performs bidirectional communication with the mobile communication apparatus via the communication interface; and the sensor device collects state information of the bicycle in real time, and the control unit processes the state information and sends the processed state information to the cloud end via the communication interface.

4. The system according to claim 3, **characterized in that** the bicycle-mounted electronic apparatus further comprises an input device which is connected to the control unit and by which an instruction or information is input into the control unit so that the control unit executes the instruction or information.

5. The system according to any of claims 1-4, **characterized in that** the state information includes one or more pieces of following information: unlocking state information, bicycle locking state information, position information, a riding distance, a riding time, a riding speed and power.

6. A control method for a bicycle management system according to claim 1, comprising:
a logon step for allowing the mobile communication apparatus to establish a connection with the cloud end;
a bicycle pickup step for unlocking the bicycle according to an unlocking instruction sent from the mobile communication apparatus and/or the cloud end so that a bicycle enters an available state;
a bicycle use step for allowing the bicycle-mounted electronic apparatus to collect state information of the bicycle and to send the state information to the mobile communication apparatus and/or the cloud end; and
a bicycle return step for allowing the cloud end to confirm a bicycle locking state and to terminate the bicycle use cloud end after a user's ride ends.

7. The control method according to claim 6, further comprising:
a booking step for providing information about available bicycles near the user's input destination and allowing the user to book a bicycle within the scope of the available bicycles; and
a bicycle seeking step of helping the user find the booked bicycle when the user gets close to the destination.

8. The control method according to claim 6, further comprising:
a bicycle search step for, according to the user's current position, providing information cloud endabout available bicycles near the user's current position, and guiding the user to find an available bicycle near the user's current position.

9. The control method according to any of claims 6-8, wherein the bicycle use step includes a pause step for pausing the use of the bicycle.

10. A control apparatus for a bicycle management system according to claim 1, comprising:
a logon means for allowing the mobile communication apparatus to establish a connection with the cloud end;
a bicycle pickup means for unlocking the bicycle according to an unlocking instruction sent from the mobile communication apparatus and/or the cloud end so that a bicycle enters an available state;
a bicycle use means for allowing the bicycle-mounted electronic apparatus to collect state information of the bicycle and to send the state information to the mobile communication apparatus and/or the cloud end; and
a bicycle return means for allowing the cloud end to confirm a bicycle locking state and to terminate the bicycle use after a user's ride ends.

11. The control apparatus according to claim 10, further comprising:
a booking means for providing information about available bicycles near the user's input destination and allowing the user to book a bicycle within the scope of the available bicycles; and
a bicycle seeking means of helping the user find the booked bicycle when the user gets close to the destination.

12. The control apparatus according to claim 10, further comprising:
a bicycle search means for, according to the user's current position, providing information about available bicycles near the user's current position, and guiding the user to find an available bicycle near the user's current position.

13. The control apparatus according to any of claims 10-12, wherein the bicycle use means includes a pause means for pausing the use of the bicycle.

14. A bicycle-mounted electronic apparatus, including a control unit, a sensor device and a communication interface, wherein the sensor device and the communication interface are connected to the control unit respectively; the control unit performs bidirectional communication with the cloud end via the communication interface; the control unit performs bidirectional communication with the mobile communication apparatus via the communication interface; and the sensor device collects state information of the bicycle in real time and sends the state information to the control unit.

15. The bicycle-mounted electronic apparatus according to claim 14, **characterized in that** the bicycle-mounted electronic apparatus further comprises an input device which is connected to the control unit and by which an instruction or information is input into the control unit so that the control unit executes the instruction or information.

16. A bicycle comprising the bicycle-mounted electronic apparatus according to claim 14 or 15, **characterized in that** the bicycle further comprises an anti-theft device which is electrically connected to the bicycle-mounted electronic apparatus and whose unlocking and/or locking is controlled by the bicycle-mounted electronic apparatus according to an instruction from the mobile communication apparatus and/or the cloud end.
